# EUROPEAN PATENT APPLICATION

(11) **EP 4 803 390 A1**
(43) Date of publication of application: **09.09.2026**
(21) Application number: 26151449.1
(22) Date of filing: 13.01.2026
(51) Int. Cl.: B60W 10/08, B60W 10/18, B60W 10/20, B60W 10/22, B60W 30/02, B60W 30/182, B60W 50/08

(54) **METHOD AND APPARATUS FOR CONTROLLING VEHICLE BODY ATTITUDE, COMPUTER-READABLE STORAGE MEDIUM, ELECTRONIC APPARATUS, AND COMPUTER PROGRAM PRODUCT**

(30) Priority: 06.03.2025 CN 202510259901
(71) Applicant: SAIC MOTOR Corporation Limited, Shanghai 201203 (CN)
(72) Inventor: LU, Yong, Shanghai, 201203 (CN); ZHOU, Yuxing, Shanghai, 201203 (CN); MA, Chengjie, Shanghai, 201203 (CN); ZHANG, Pengjun, Shanghai, 201203 (CN); HE, Jun, Shanghai, 201203 (CN)
(74) Representative: Berggren Oy

(57) **Abstract**

Disclosed are a method and an apparatus for controlling a vehicle body attitude, a computer-readable storage medium, an electronic apparatus, and a computer program product. The method for controlling a vehicle body attitude includes: determining a current driving scene of a vehicle according to road condition information of a road on which the vehicle is located, state information of the vehicle, and an operation instruction from a target object; determining a current driving mode of the vehicle in response to a selection instruction from the target object; determining a target vehicle body attitude according to the current driving scene and the current driving mode; and controlling, in a case that a current vehicle body attitude does not match the target vehicle body attitude, a plurality of actuators of the vehicle to act, to match an adjusted current vehicle body attitude of the vehicle with the target vehicle body attitude.

## Description

### Technical Field

Embodiments of the present disclosure relate to the technical field of vehicle control, and particularly relate to a method and an apparatus for controlling a vehicle body attitude, a computer-readable storage medium, an electronic apparatus, and a computer program product.

### Background

As the industry of pure electric vehicles rapidly develop, users put forward increasingly high requirements for performances of the pure electric vehicles. Chassises are key factors affecting the performances of the pure electric vehicles. In a process of driving the pure electric vehicle, especially an electric four-wheel drive vehicle, lateral, longitudinal, and vertical control over the vehicle particularly significantly influences a vehicle body attitude.

In the related art, control over a motion of the vehicle generally tends to focus on a single dimension. For instance, acceleration of the vehicle is controlled by a drive control system, deceleration and stop of the vehicle are controlled by a brake control system, steering of the vehicle is controlled by a steering system, and a vertical motion of the vehicle is controlled by a suspension system.

However, through the method for controlling a vehicle in the related art, an excellent attitude of the vehicle cannot be kept in different driving scenes and different driving modes.

### Summary

Embodiments of the present disclosure provide a method and an apparatus for controlling a vehicle body attitude, a computer-readable storage medium, an electronic apparatus, and a computer program product.

According to an aspect of embodiments of the present disclosure, a method for controlling a vehicle body attitude is provided. The method includes: determining a current driving scene of a vehicle according to road condition information of a road on which the vehicle is located, state information of the vehicle, and an operation instruction from a target object; determining a current driving mode of the vehicle in response to a selection instruction from the target object; determining a target vehicle body attitude of the vehicle according to the current driving scene and the current driving mode; and controlling, in a case that a current vehicle body attitude of the vehicle does not match the target vehicle body attitude, a plurality of actuators of the vehicle to act, to match an adjusted current vehicle body attitude of the vehicle with the target vehicle body attitude.

In an illustrative embodiment, the determining a target vehicle body attitude of the vehicle according to the driving scene and the driving mode includes: determining a constraint boundary condition of the vehicle according to physical parameter information of the vehicle; determining, according to the operation instruction from the target object, a vehicle motion state expected by the target object; determining a target vehicle motion state according to the current driving scene and the vehicle motion state expected by the target object, where the target vehicle motion state satisfies the constraint boundary condition; and determining the target vehicle body attitude of the vehicle according to the target vehicle motion state and the current driving mode.

In an illustrative embodiment, the determining, according to the operation instruction from the target object, a vehicle motion state expected by the target object includes: determining a driving intention of the target object according to the operation instruction from the target object; predicting the vehicle motion state expected by the target object according to the operation instructions from the target object, the driving intention of the target object, and physical characteristics of the vehicle.

In an illustrative embodiment, the controlling, in a case that a current vehicle body attitude of the vehicle does not match the target vehicle body attitude, a plurality of actuators of the vehicle to act includes: acquiring the current vehicle body attitude of the vehicle; determining an adjustment requirement of the vehicle body attitude in a case that the current vehicle body attitude of the vehicle does not match the target vehicle body attitude; determining a control target type of the vehicle body attitude according to the current driving scene and the adjustment requirement of the vehicle body attitude; and controlling, according to the control target type of the vehicle body attitude, the plurality of actuators to act.

In an illustrative embodiment, the determining an adjustment requirement of a vehicle body attitude in a case that the current vehicle body attitude of the vehicle does not match the target vehicle body attitude includes: comparing the current vehicle body attitude with the target vehicle body attitude to determine a deviation between the current vehicle body attitude with the target vehicle body attitude; determining the adjustment requirement according to the deviation and an emergency degree, wherein the adjustment requirement are divided into different grades, and the different grades includes a slight adjustment, a medium adjustment, and an emergency adjustment.

In an illustrative embodiment, the controlling, according to the control target type of the vehicle body attitude, the plurality of actuators to act includes: determining the plurality of target actuators according to the control target type; determining, according to the current driving mode, a priority order in which the plurality of target actuators act; and controlling, according to the priority order, the plurality of target actuators to act, to achieve a control target corresponding to the control target type.

In an illustrative embodiment, the method further includes: determining response characteristics of each actuator of the vehicle according to design parameters of each actuators of the vehicle, where the response characteristics include an adjustment amplitude of the each actuator to the vehicle body attitude, a response speed of the each actuator, and an influence degree of actions by the each actuators on comfort of the vehicle; and determining, according to the response characteristics of the each actuator, the priority order in which the plurality of actuators act in each driving mode.

In an illustrative embodiment, the controlling, according to the priority order, the plurality of target actuators to act, to achieve a control target corresponding to the control target type includes: determining a control strategy of the plurality of target actuators according to the priority order, where the control strategy includes at least one of a lateral control strategy, a longitudinal control strategy, and a vertical control strategy of the vehicle; determining control parameters of the plurality of target actuators according to the control target corresponding to the control target type; and controlling, according to the control strategy, the plurality of target actuators to act using the control parameters, to achieve the control target corresponding to the control target type.

In an illustrative embodiment, the controlling, according to the control target type of the vehicle body attitude, the plurality of actuators to act includes: converting the control target type of the vehicle body attitude into actuator dynamics instructions; dispatching and controlling, according to the actuator dynamics instructions, the plurality of actuators to act.

In an illustrative embodiment, the determining a current driving scene of a vehicle according to road condition information of a road on which the vehicle is located, state information of the vehicle, and an operation instruction from a target object includes: determining a current scene characteristic of the vehicle according to the road condition information of the road on which the vehicle is located, the state information of the vehicle, and the operation instruction from the target object; and performing matching in a preset scene database by using the current scene characteristic of the vehicle, and determining a scene having a highest matching degree with the current scene characteristic of the vehicle as the current driving scene of the vehicle.

In an illustrative embodiment, the determining, according to the current driving mode, a priority order in which the plurality of target actuators act includes: automatically setting the priority order in which the plurality of target actuators act according to a control strategy for the current driving mode, wherein the control strategy defines intervention logics and control weights of the plurality of target actuators in the current driving mode.

According to another aspect of embodiments of the present disclosure, an apparatus for controlling a vehicle body attitude is further provided. The apparatus includes:
a scene determining module configured to determine a current driving scene of a vehicle according to road condition information of a road on which the vehicle is located, state information of the vehicle, and an operation instruction from a target object;
a mode determining module configured to determine a current driving mode of the vehicle in response to a selection instruction from the target object;
an attitude determining module configured to determine a target vehicle body attitude of the vehicle according to the current driving scene and the current driving mode; and
an attitude controlling module configured to control, in a case that a current vehicle body attitude of the vehicle does not match the target vehicle body attitude, a plurality of actuators of the vehicle to act, to match an adjusted current vehicle body attitude of the vehicle with the target vehicle body attitude.

According to yet another aspect of embodiments of the present disclosure, a computer-readable storage medium is further provided. The computer-readable storage medium stores a computer program. The computer program is configured to perform the above method for controlling a vehicle body attitude when run.

According to yet another aspect of embodiments of the present disclosure, an electronic apparatus is further provided. The electronic apparatus includes a memory, a processor, and a computer program stored in the memory and capable of being run by the processor. The processor performs the above method for controlling a vehicle body attitude by the computer program.

According to still another aspect of embodiments of the present disclosure, a computer program product is further provided. The computer program product includes a computer program. The computer program, when executed by a processor, implements steps of the method in all embodiments of the present disclosure.

According to the above method for controlling a vehicle body attitude, firstly, a current driving scene of a vehicle is determined according to road condition information of a road on which the vehicle is located, state information of the vehicle, and an operation instruction from a target object. Thus, the vehicle body attitude of the vehicle can be accurately controlled subsequently. In response to a selection instruction from the target object, a current driving mode of the vehicle is determined, such that a driving requirement of the target object is obtained. Thus, subsequent control over the vehicle body attitude of the vehicle can satisfy the requirement of the target object. According to the current driving scene and the current driving mode, a target vehicle body attitude of the vehicle is determined, such that an optimal vehicle body attitude is obtained. The optimal vehicle body attitude can guarantee handling performance, stability, and comfort of the vehicle. In a case that a current vehicle body attitude of the vehicle does not match the target vehicle body attitude, a plurality of actuators of the vehicle are controlled to act, to match the adjusted current vehicle body attitude of the vehicle with the target vehicle body attitude. Thus, the vehicle body attitude is controlled. To sum up, according to the method in the present disclosure, by accurately recognizing the driving scene and intelligently matching the driving mode, the target vehicle body attitude of the vehicle can be dynamically adjusted. It is ensured that optimal handling performance and optimal stability of the vehicle can be kept under various driving conditions.

### Brief Description of the Drawings

The accompanying drawings herein are incorporated into the description as a constituent part of the description, illustrate embodiments conforming to the present disclosure, and serve to explain principles of the present disclosure along with the description.

To more clearly describe technical solutions in embodiments of the present disclosure or in the prior art, the accompanying drawings required to be used in descriptions in the embodiments or in the prior art are briefly introduced below. Apparently, a person of ordinary skill in the art can further derive other accompanying drawings according to these accompanying drawings without making inventive efforts.
Fig. 1 is a structural block diagram of hardware of an in-vehicle terminal for a method for controlling a vehicle body attitude according to an embodiment of the present disclosure;
Fig. 2 is a first flowchart of a method for controlling a vehicle body attitude according to an embodiment of the present disclosure;
Fig. 3 is a second flowchart of a method for controlling a vehicle body attitude according to an embodiment of the present disclosure;
Fig. 4 is a third flowchart of a method for controlling a vehicle body attitude according to an embodiment of the present disclosure;
Fig. 5 is a fourth flowchart of a method for controlling a vehicle body attitude according to an embodiment of the present disclosure;
Fig. 6 is a fifth flowchart of a method for controlling a vehicle body attitude according to an embodiment of the present disclosure;
Fig. 7 is a sixth flowchart of a method for controlling a vehicle body attitude according to an embodiment of the present disclosure;
Fig. 8 is a seventh flowchart of a method for controlling a vehicle body attitude according to an embodiment of the present disclosure;
Fig. 9 is a schematic diagram of a coordinated control architecture of a vehicle controller according to an embodiment of the present disclosure; and
Fig. 10 is a structural block diagram of an optional apparatus for controlling a vehicle body attitude according to an embodiment of the present disclosure.

### Detailed Description of the Embodiments

To enable a person skilled in the art to better understand the solutions of the present disclosure, the technical solutions of embodiments of the present disclosure are described clearly and completely below in combination with accompanying drawings of the embodiments of the present disclosure. Apparently, the embodiments described are merely some embodiments of the present disclosure, rather than all embodiments of the present disclosure. Based on the embodiments of the present disclosure, all other embodiments derived by a person of ordinary skill in the art without making creative efforts should fall within the scope of protection of the present disclosure.

It should be noted that the terms "first", "second", etc. in the description and claims of the present disclosure and in the above accompanying drawings are used for distinguishing between similar objects and not certainly used for describing a particular order or a sequential order. It should be understood that data used in this way can be interchanged under appropriate circumstances, such that the embodiments of the present disclosure described herein can be implemented in an order other than those illustrated or described herein. In addition, the terms "include", "have" and their variations are intended to cover non-exclusive inclusion. For instance, a process, method, system, product, or device, which includes a series of steps or units, is not required to be limited by those explicitly listed, but can include other steps or units not explicitly listed or inherent to the process, method, product, or device.

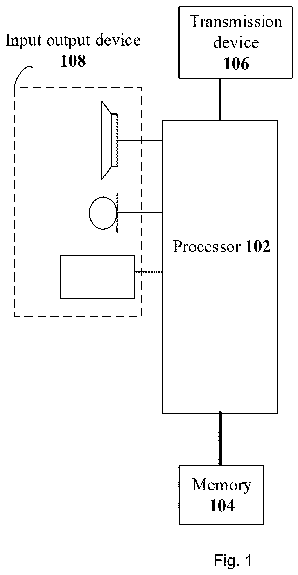

Method embodiments provided in embodiments of the present disclosure can be implemented by an in-vehicle terminal or a similar computation apparatus. For instance, the method embodiment is implemented by the in-vehicle terminal. Fig. 1 is a structural block diagram of hardware of a computer terminal of a method for controlling a vehicle body attitude according to an embodiment of the present disclosure. As shown in Fig. 1, the computer terminal may include one or more (only one is shown in Fig. 1) processors 102 (the processor 102 may include but is not limited to a microprocessor unit (MPU) or a programmable logic device (PLD)) and a memory 104 for storing data. In an illustrative embodiment, the above in-vehicle terminal may further include a transmission device 106 for a communication function and an input/output device 108. A person of ordinary skill in the art can understand that the structure shown in Fig. 1 is merely illustrative and does not limit the structure of the above in-vehicle terminal. For instance, the in-vehicle terminal may include more or fewer components than those shown in Fig. 1, or have equivalent functions as those shown in Fig. 1 or different configurations more than those shown in Fig. 1.

The memory 104 may be configured to store a computer program, such as a software program of application software and a module, For instance, the computer program is a computer program corresponding to the method for controlling a vehicle body attitude according to an embodiment of the present disclosure. The processor 102 executes various functional applications and data processing by running the computer program stored in the memory 104, that is, implements the above method. The memory 104 may include a high-speed random access memory, and may alternatively include a non-volatile memory, such as one or more magnetic storage apparatuses, flash memories, or other non-volatile solid-state memories. In some instances, the memory 104 may further include a memory remotely arranged relative to the processor 102. The remote memory may be connected to the in-vehicle terminal by a network. Instances of the above network include but are not limited to the internet, an enterprise intranet, a local area network, a mobile communication network, and their combinations.

The transmission device 106 is configured to receive or transmit data by one network. Specific instances of the above network may include a wireless network provided by a communication provider of the in-vehicle terminal. In an instance, the transmission device 106 includes a network interface controller (NIC). The network interface controller may be connected to another network device by a base station, to be in communication with the internet. In an instance, the transmission device 106 may be a radio frequency (RF) module. The radio frequency module is configured to be in communication with the internet in a wireless manner.

In the related art, a control system for lateral control over the vehicle, a control system for longitudinal control over the vehicle, and a control system for vertical control over the vehicle are generally independent from each other in design, and optimize functions for which the control systems are responsible respectively. However, mutual influences and coupling relationships among various dimensions of a vehicle motion in different driving scenes and different driving modes are ignored. In scenes such as high-speed cornering, emergency obstacle avoidance, and running on complex roads (such as a Split adhesion road(a road with different coefficients of adhesion on both sides) and a Step adhesion road(a road with different coefficients of adhesion in different sections)), control requirements of yaw, roll, pitch, and vertical translation of the vehicle appear at the same time, and these requirements may conflict with each other. For instance, during the emergency obstacle avoidance, a relatively large yaw moment is required to rapidly change a direction of the vehicle. However, at the same time, a suspension system may be required to rapidly respond to suppress roll. If these control requirements cannot be properly coordinated, a vehicle attitude may be unstable. Running safety of the vehicle and driving experience of a driver may even be affected. In addition, different driving modes, such as an economic mode, a sport mode, and an off-road mode, have different performance requirements for the vehicle. For instance, in the economic mode, energy efficiency and comfort of the vehicle are main considerations. In the sport mode, handling performance and stability of the vehicle are more critical. If the systems cannot rapidly adapt and make corresponding adjustments when a driving mode is switched, the vehicle may have poor performances in different modes, and fail to satisfy expectations of a user for vehicle performances in particular driving modes. To sum up, a system for controlling a motion of a vehicle in the prior art has deficiencies in a capability to satisfy multi-dimensional control requirements and adapt to different driving scenes and different driving modes. Especially in a situation that simultaneous control in a lateral direction, a longitudinal direction, and a vertical direction is required, work of the actuators cannot be effectively coordinated. Thus, an excellent attitude of the vehicle is hardly kept, and an overall driving performance and safety of the vehicle are affected.

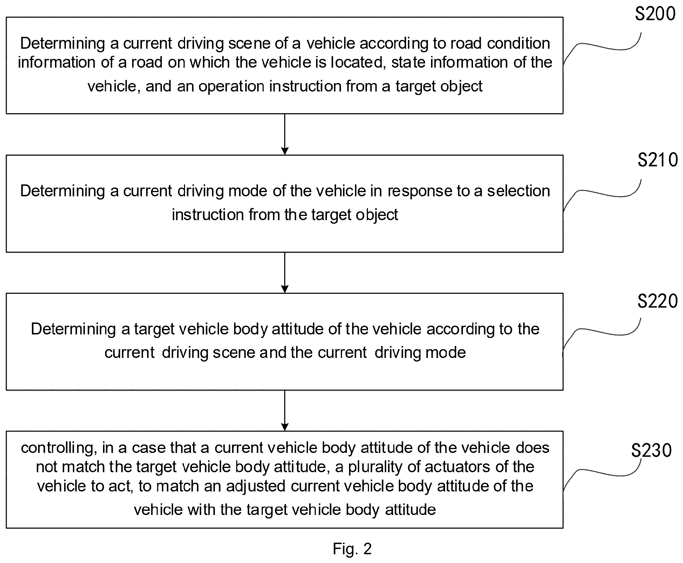

Based on the above technical problem, the embodiment provides a method for controlling a vehicle body attitude. The method is applied to an in-vehicle terminal. Fig. 2 is a flowchart of an optional method for controlling a vehicle body attitude according to an embodiment of the present disclosure. The flow includes following steps S200-S230.

Step S200: a current driving scene of a vehicle is determined according to road condition information of a road on which the vehicle is located, state information of the vehicle, and an operation instruction from a target object.

Specifically, the driving scene is determined based on the road condition information of the road on which the vehicle is located, the real-time state information of the vehicle, and the operation instruction from the target object (a driver or an automatic driving system). This process is a basis for intelligent control, and can ensure that a control strategy satisfies an actual driving requirement.

Illustratively, collection of road condition information: road situations including a road material (such as dryness, wetness, ice, and snow), obstacle distribution, road geometric characteristics (such as a curve and a gradient), etc. are detected in real time by an in-vehicle sensor, such as a camera, radar, and lidar. Monitoring of vehicle state: indexes of a vehicle, such as a speed, acceleration, a steering angle, a brake pressure, a suspension state, a battery charge, and an electric motor temperature of a vehicle, are continuously monitored, such that a dynamic performance and health of the vehicle are evaluated. Analysis of operation instruction: throttle input, brake input, and steering wheel input from the driver, and a control instruction from the automatic driving system are analyzed, such that a control intention of the driver and an action target of the system are understood. Scene recognition algorithm: through a machine learning algorithm or a deep learning algorithm, the collected road condition information, vehicle state, and operation instruction are inputted into a trained model, and a current most likely driving scene is outputted, such as urban driving, high-speed driving, emergency obstacle avoidance, and wet and slippery road driving.

Step S210: a current driving mode of the vehicle is determined in response to a selection instruction from the target object.

Specifically, a selection of the driving mode indicates preference of the target object for a vehicle performance, such as an economic mode, a sport mode, and a comfort mode. This step ensures that a subsequent control strategy can satisfy a requirement of the target object.

Illustratively, recognition of driving mode: through a human-computer interaction interface or by a sensor in the vehicle, a mode selection instruction from the target object is received, and a specific requirement of the driver is understood. Logic of mode matching: a mapping table between the driving mode and a vehicle performance parameter is established. When the target object selects a mode, the system automatically adjusts a response characteristic of the vehicle according to the mapping table, such as adjusts power output, steering sensitivity, and suspension hardness. Mode switching mechanism: a smooth transition strategy for mode switching is designed, such that when a mode is switched, a performance of the vehicle is prevented from suddenly changing, and driving safety and driving comfort are ensured.

Step S220: a target vehicle body attitude of the vehicle is determined according to the current driving scene and the current driving mode.

Specifically, once the current driving scene and the current driving mode are determined, the system is required to compute an optimal vehicle body attitude satisfying a current situation, to improve handling performance, stability, and comfort of the vehicle.

Illustratively, application of multi-degree-of-freedom model: an ideal yaw attitude, an ideal roll attitude, an ideal pitch attitude, and an ideal vertical translation attitude in which the vehicle should be kept are computed by using a multi-degree-of-freedom vehicle model based on the current driving scene and the current driving mode. Setting of control target: a specific target attitude parameter is set, such as a target yaw rate and a target roll angle. Theses parameters indicate an optimal performance which the vehicle should have in a current scene. Determination of constraint boundary: according to a physical constraint and a safety requirement of the vehicle, a feasible range of the target vehicle body attitude is determined, such that the control instruction is prevented from going beyond capabilities of the actuators.

Step S230: in a case that a current vehicle body attitude of the vehicle does not match the target vehicle body attitude, a plurality of actuators of the vehicle are controlled to act, to match an adjusted current vehicle body attitude of the vehicle with the target vehicle body attitude.

Specifically, when it is detected that a deviation exists between an actual attitude of the vehicle and the target attitude, through the method according to embodiments in the present disclosure, a plurality of actuators (such as a drive electric motor, a brake system, a steering system, and a suspension system) are intelligently controlled, to adjust the attitude of the vehicle to achieve a target state.

Illustratively, detection of attitude deviation: parameters of the vehicle, such as an actual yaw rate, an actual sideslip angle, an actual roll angle, an actual pitch angle, and an actual vertical displacement of the vehicle, are monitored by the sensor, and compared with the target attitude to detect a deviation. Coordinated control over actuators: based on a control target type and selected actuators, a coordinates control rule is made, torque distribution among the actuators is optimized, and rapid adjustment of the vehicle attitude is ensured. Generation and execution of control instructions: according to a size and a direction of the deviation, specific control instructions for the actuators are generated and executed to adjust, for instance, drive torque, a brake force, a steering angle, and suspension stiffness. Fault-tolerant redundancy mechanism: when an actuator is faulty, the system automatically dispatches another healthy actuator to replace the faulty actuator to perform a function, or performs degradation when necessary, to ensure safety of the vehicle.

In the embodiment, firstly, a current driving scene of a vehicle is determined according to road condition information of a road on which the vehicle is located, state information of the vehicle, and an operation instruction from a target object. Thus, the vehicle body attitude of the vehicle can be accurately controlled subsequently. In response to a selection instruction from the target object, a current driving mode of the vehicle is determined, such that a driving requirement of the target object is obtained. Thus, subsequent control over the vehicle body attitude of the vehicle can satisfy the requirement of the target object. According to the current driving scene and the current driving mode, a target vehicle body attitude of the vehicle is determined, such that an optimal vehicle body attitude is obtained. The optimal vehicle body attitude can guarantee handling performance, stability, and comfort of the vehicle. In a case that a current vehicle body attitude of the vehicle does not match the target vehicle body attitude, a plurality of actuators of the vehicle are controlled to act, to match the adjusted current vehicle body attitude of the vehicle with the target vehicle body attitude. Thus, the vehicle body attitude is controlled. To sum up, according to the method in the present disclosure, by accurately recognizing the driving scene and intelligently matching the driving mode, the target vehicle body attitude of the vehicle can be dynamically adjusted. It is ensured that optimal handling performance and optimal stability of the vehicle can be kept under various driving conditions.

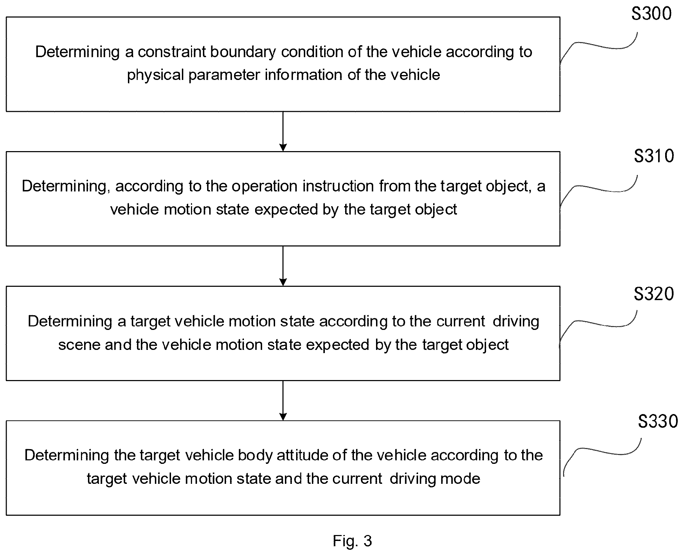

In an embodiment, as shown in Fig. 3, step S220 that a target vehicle body attitude of the vehicle is determined according to the driving scene and the driving mode includes: steps S300-S330.

Step S300: a constraint boundary condition of the vehicle is determined according to physical parameter information of the vehicle.

Specifically, the constraint boundary condition is set according to physical parameter information of the vehicle. The constraint boundary condition defines a range in which the vehicle can safely and effectively run in different scenes, to ensure that the control instruction cannot go beyond capabilities of the actuators and cannot make the vehicle unstable.

Illustratively, evaluation of physical parameters of vehicle: physical parameters of the vehicle are collected and analyzed, such as a maximum yaw rate, a roll angle limit, a pitch angle limit, maximum torque of the drive electric motor, a maximum pressure of the brake system, and a maximum stroke and a stiffness range of the suspension system. Computation of dynamic constraint boundary: in combination with real-time vehicle state information (such as a speed, acceleration, and a tire contact force) and real-time road information (such as a slope, a curve curvature, and a road adhesion coefficient), a dynamic constraint boundary of the vehicle in a current scene is computed, to indicate a physical capability and a safety requirement of the vehicle. Adjustment strategy for constraint boundary: an adjustment strategy for a constraint boundary is formulated, and the constraint boundary is dynamically adjusted according to diagnostic information (such as a fault state and a performance degradation) of the actuators and an overall energy management requirement of the vehicle, such that it is ensured that the vehicle can safely run under various conditions.

Step S310: a vehicle motion state expected by the target object is determined according to the operation instruction from the target object.

Specifically, the vehicle motion state expected by the target object indicates the control intention of the driver or the driving strategy of the automatic driving system, and is a basis for adjusting the vehicle attitude and controlling the actuators.

Illustratively, analysis of operation instruction: the operation instruction from the target object is analyzed through a human-computer interaction interface (such as a steering wheel, an accelerator pedal, and a brake pedal) of the vehicle or input of the automatic driving system, and a requirement of the target object for the vehicle motion state is determined, such as acceleration, steering, and brake. Recognition of driving intention: through a machine learning algorithm and according to a series of operation instructions from the target object, a driving style (such as an aggressive style and a conservative style) and a driving intention (such as emergency obstacle avoidance and comfortable driving) are recognized. Prediction of motion state: based on the driving intention and the operation instruction and in combination with physical characteristics of the vehicle, the vehicle motion state expected by the target object is predicted and includes an expected yaw rate, an expected sideslip angle, an expected roll angle, an expected pitch angle, an expected vertical displacement, and other parameters. The expected yaw rate of the vehicle is computed according to a multi-degree-of-freedom vehicle model and a driving mode. For instance, in combination with a steering wheel angle and a vehicle speed, according to a two-degree-of-freedom model of the vehicle, and in consideration of a road adhesion limit, the expected yaw rate of the vehicle is obtained.

Step S320: a target vehicle motion state is determined according to the current driving scene and the vehicle motion state expected by the target object.

The target vehicle motion state satisfies the constraint boundary condition.

Specifically, the target vehicle motion state is a vehicle motion state matching the current driving scene based on considering the constraint boundary condition and an expectation from the target object, which ensures that the vehicle can safely and efficiently respond to the driving intention.

Illustratively, matching between scene and motion state: matching is performed, according to a recognition result of the driving scene (such as urban traffic, high-speed driving, and a wet and slippery road), with the motion state expected by the target object, to determine an optimal motion state conforming to the constraint boundary condition in the current scene. Optimization of motion state: through a multi-target optimization algorithm and by comprehensively considering the physical parameters of the vehicle, the expectation from the target object, and a road constraint, the target vehicle motion state is optimized. It is ensured that the requirement of the target object is satisfied, and the vehicle runs in an interval which is safe and has optimal energy efficiency. Selection of control target: a specific control target is extracted from the target vehicle motion state, such as yaw control, roll suppression, pitch control, and vertical translation control. These control targets are bases for subsequent coordinated control.

Step S330: the target vehicle body attitude of the vehicle is determined according to the target vehicle motion state and the current driving mode.

Specifically, the target vehicle body attitude is determined based on the target vehicle motion state and the current driving mode, and guides the control strategy of the actuators, to achieve an optimal performance of the vehicle in a particular scene.

Illustratively, analysis of driving mode: according to the driving mode (such as an economic mode, a sport mode, and an off-road mode) selected by the target object, a priority of vehicle performances in the mode is analyzed, such as a power performance, handling performance stability, and comfort. Setting of target attitude: in combination with an analysis result of the target vehicle motion state and an analysis result of the current driving mode, a target attitude parameter of the vehicle is set, such as a target yaw rate, a target roll angle, a target pitch angle, and target vertical displacement, to ensure that the vehicle attitude matches the driving intention and the scene requirement. Coordinated control strategy: according to the diagnostic information of the target vehicle body attitude and diagnostic information of the actuators, a coordinated control strategy is designed, to ensure that the actuators (such as a drive, a brake, steering, and suspension) can efficiently and cooperatively work, so that the target attitude is achieved. Moreover, fault-tolerant redundancy is considered, to deal with possible faults of the actuators.

In the embodiment, a reasonable constraint boundary condition is set by accurately evaluating the physical parameter information of the vehicle, to ensure that the vehicle can safely run in any driving scene. Moreover, by analyzing the operation instruction from the target object and recognizing the driving intention of the target object, the target vehicle motion state can be intelligently determined. In combination with the driving mode, the target vehicle body attitude satisfying the requirement of the target object and the requirement of the scene is set. Through this series of processes, handling performance of the vehicle is optimized, and driving experience is improved. Moreover, conflicts among the actuators are effectively avoided, and a fault-tolerant capability and safety of the system are improved.

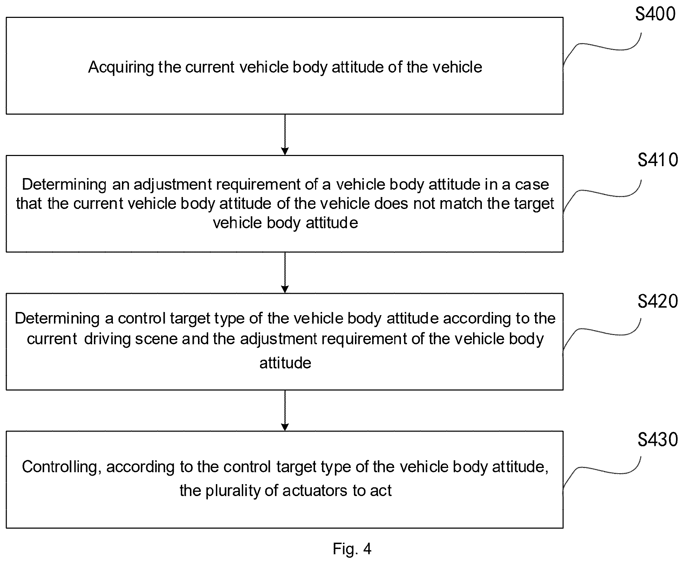

In an embodiment, as shown in Fig. 4, step S230 that in a case that a current vehicle body attitude of the vehicle does not match the target vehicle body attitude, a plurality of actuators of the vehicle are controlled to act, includes: steps S400-S430.

Step S400: the current vehicle body attitude of the vehicle is acquired.

Specifically, the current vehicle body attitude of the vehicle includes an actual yaw state, an actual roll state, an actual pitch state, and an actual vertical translation state of the vehicle in a running process, and is basic information for adjusting and controlling the attitude.

Illustratively, sensor data acquisition: state parameters such as a yaw rate, a roll angle, a pitch angle, and a vertical displacement of the vehicle are monitored in real time by an inertial measurement unit (IMU), a wheel speed sensor, a lateral acceleration sensor, a longitudinal acceleration sensor, a roll sensor, a pitch sensor, etc. Data fusion and data processing: through a sensor data fusion algorithm, such as Kalman filter or complementary filter, acquired data are processed to eliminate noise interference, and an accurate estimation of the current vehicle body attitude of the vehicle is obtained. Estimation of vehicle state: through a vehicle state estimation algorithm, such as state estimation based on a multi-degree-of-freedom vehicle model, and in combination with a vehicle parameter (such as a vehicle speed, acceleration, and a steering angle) monitored in real time, current attitude information of the vehicle is further refined, and accuracy of a control instruction is ensured.

Step S410: an adjustment requirement of the vehicle body attitude is determined in a case that the current vehicle body attitude of the vehicle does not match the target vehicle body attitude.

Specifically, after the current vehicle body attitude is compared with the target vehicle body attitude, if a deviation exists, a specific adjustment requirement is required to be determined to provide a basis for a subsequent control strategy.

Illustratively, computation of attitude deviation: the acquired current attitude information of the vehicle is compared with the target attitude, and a yaw rate deviation, a roll angle deviation, a pitch angle deviation, and a vertical displacement deviation are computed. Grading of adjustment requirement: according to the deviation and an emergency degree, adjustment requirements are divided into different grades, such as a slight adjustment, a medium adjustment, and an emergency adjustment, such that a response level and the control strategy of the actuators are determined. Determination of priority of control requirement: a priority of an adjustment requirement is determined based on the driving scene and the driving mode. For instance, in a scene of emergency obstacle avoidance, yaw control has a highest priority such that it is ensured that the vehicle can rapidly respond to avoid an accident.

Step S420: a control target type of the vehicle body attitude is determined according to the current driving scene and the adjustment requirement of the vehicle body attitude.

Specifically, the control target type refers to a particular vehicle body attitude adjustment that can be achieved through coordinated control, such as yaw pre-stabilization, roll suppression, pitch control, and vertical translation control.

Illustratively, recognition of control target type: the control target type required to be first adjusted is recognized according to the determined vehicle body attitude adjustment requirement and the driving scene of the vehicle. For instance, in a scene of a wet and slippery road, roll control and yaw control may be required to be simultaneously used as key control targets. Matching of capabilities of actuators: capabilities and response characteristics of the actuators (such as the drive electric motor, the brake system, the steering system, and the suspension system) are evaluated, and which actuator is most suitable for achieving the current control target type is determined. Arbitration of control target type: in consideration of interactions among the actuators, differences among the driving modes, and differences among driving intentions, and through an intelligent arbitration algorithm, such as a rule-based expert system or a rule-based machine learning model, a final control target type is determined. It is ensured that the actuators can cooperatively work to optimally adjust the vehicle attitude.

Illustratively, the control target type may include non-intervention. Non-intervention means that a user selects a custom driving mode to stop control over the vehicle body attitude. Or a driving scene has no intervention requirement for the vehicle body attitude. The control target type may further include but is not limited to limit obstacle avoidance control, split adhesion road control, step adhesion road control, a lateral movement function, a one-click exit function, etc. A control target type of the limit obstacle avoidance control includes control over yaw, roll, drive ( or electric brake), and brake of the vehicle body attitude, and vertical control of the vehicle body attitude. A control target type of the split adhesion road control includes control over yaw, drive and brake of the vehicle body attitude. A control target type of the step adhesion road control includes control over yaw, drive, and brake of the vehicle body attitude. A control target type of the lateral movement function includes control over drive and yaw of the vehicle body attitude, and lateral control of the vehicle body attitude. A control target type of the one-click exit function includes control over yaw, brake, and drive of the vehicle body attitude. A control target type required for coordinated control can alternatively be automatically determined according to a current state of the vehicle, and includes control over yaw, sideslip, roll, and pitch of the vehicle body attitude.

The control target type required for the coordinated control is determined according to a vehicle configuration, the driving mode, the driving scene, etc. For instance, linear yaw rate gain: in a case of a vehicle configured with wire-controlled front-wheel steering and rear-wheel steering, an appropriate yaw rate gain can be set to improve steering experience of a user. Flexible small-radius turning: in a case of a vehicle configured with only rear-wheel steering, a rear-wheel steering angle can be set in a direction opposite that of a front-wheel steering angle at a low speed, to reduce a turning radius and improve low-speed flexibility of the vehicle. Acceleration vector control: lateral, longitudinal, and vertical three-dimensional acceleration vector control is performed on the vehicle.

Step S430: according to the control target type of the vehicle body attitude, the plurality of actuators are controlled to act.

Specifically, according to the determined control target type of the vehicle body attitude, in the present disclosure, a corresponding actuator is controlled to act, to adjust the current attitude of the vehicle to match the current attitude with the target attitude.

Illustratively, conversion to dynamics instruction of actuators: the control target type is converted into specific actuator dynamics instructions, such as a torque requirement of the drive electric motor, pressure distribution of the brake system, a steering angle instruction of the steering system, and a height and a stiffness adjustment of the suspension system. Dispatch and control of actuators: according to the dynamics instructions after conversion, the actuators are dispatched and controlled to perform actions. Moreover, in consideration of interactions among the actuators and through a coordinated control algorithm, such as sliding mode control, optimal control, or fuzzy control, it is ensured that a control effect of each actuator is maximized to avoid a control conflict. Response monitoring and feedback of actuators: response effects of the actuators are monitored in real time, new attitude information of the vehicle is collected, and closed-loop control is formed. A control instruction is adjusted according to feedback, and a rapid, smooth, and accurate adjustment of the vehicle attitude is ensured.

In the embodiment, the target vehicle body attitude of the vehicle, and the adjustment requirement and the control target type of the vehicle body attitude are intelligently determined according to the driving scene and the driving mode. Through accurate data acquisition and state estimation, accuracy of the adjustment of the vehicle attitude is ensured. Moreover, through effective dispatch and coordinated control over the actuators based on the control target type, optimal attitude control over the vehicle in different scenes is implemented. Running safety, comfort, and an overall driving performance of the vehicle are significantly improved. In a case of an actuator fault, through the method, smooth degradation can be implemented by a fault-tolerant redundancy mechanism. Thus, a basic vehicle control function can be kept, to ensure driving safety.

In an embodiment, a fault-tolerant redundancy mechanism may further be designed. Based on a plurality of actuators of the vehicle, such as the drive electric motor, the brake system, the steering system, and the suspension system, each actuator takes on a particular function in lateral, longitudinal, and vertical coordinated control over the vehicle. When an actuator is faulty, the mechanism can intelligently dispatch, according to an emergency degree of a fault and a current control target of the vehicle, another actuator to replace the faulty actuator to perform a function, or ensure, in an irreplaceable situation and through degradation, that the vehicle can smoothly and safely stop.

Fault-tolerant redundancy mechanism: actuator fault diagnosis: states of the actuators are monitored in real time by an in-vehicle self-diagnosis system. Once a fault is detected, a fault-tolerant redundancy mechanism is immediately started. Fault diagnosis includes a hardware fault (such as damage on an electric motor, failure of a sensor) and a software fault (such as failure of a control algorithm, an interruption of communication). Evaluation of capabilities of actuators: after a fault occurs, the system re-evaluates capabilities and response characteristics of the remaining actuators, to determine which actuator can replace the faulty actuator to perform a function and determine a maximum control effect that can be provided. Dispatch for function replacement: based on capability evaluations of the actuators, the coordinated control algorithm intelligently selects another actuator to achieve a control target that is originally taken on by the faulty actuator. For instance, if a front-wheel steering system is faulty, a rear-wheel steering system can replace the front-wheel steering system in some driving modes and some driving scenes, to keep yaw control over the vehicle. Degradation strategy: when no replacement actuator can be found, or a replacement actuator cannot fully satisfy the control target, the system starts a degradation strategy. The degradation strategy may include limiting a maximum running speed of the vehicle, forbidding some high-sensing features (such as limit obstacle avoidance control), and guiding the vehicle to smoothly slow down and safely stop, to avoid a risk of losing control caused by an actuator fault. Dynamic adjustments of control rules: the fault-tolerant redundancy mechanism dynamically adjusts a coordinated control rule according to availability of the remaining actuators and the priority of the control target. It is ensured that optimal control over the vehicle attitude in a case of a fault can stilled be implemented. Moreover, driving safety and driving comfort are kept.

Robustness of system being improved: even in a situation that a critical actuator is faulty, by dispatching another actuator, the system can still keep a basic vehicle control function, to ensure stable running of the vehicle in an emergency situation. Driving safety being enhanced: the fault-tolerant redundancy mechanism can rapidly respond to the actuator fault. By using the degradation strategy, it is ensured that the vehicle can be safely stopped, and a risk of loosing control caused by actuator failure can be avoided. Driving experience being kept: in a case of the actuator fault, through dispatch for function replacement, an influence on driving experience is minimized as far as possible. An operating performance and comfort of the vehicle in a faulty state are ensured. Control strategy being optimized: by dynamically adjusting the control rule, the fault-tolerant redundancy mechanism ensures that an optimal solution of vehicle attitude control can still be achieved in a multi-actuator fault scene. A control conflict is avoided, and control efficiency and control effect are improved.

In the embodiment, by designing the fault-tolerant redundancy mechanism, through intelligent dispatch and by using the degradation strategy, robustness of the system and driving safety are significantly improved, which plays a vital role in ensuring stability and reliability of the intelligent electric vehicle in a complex driving environment.

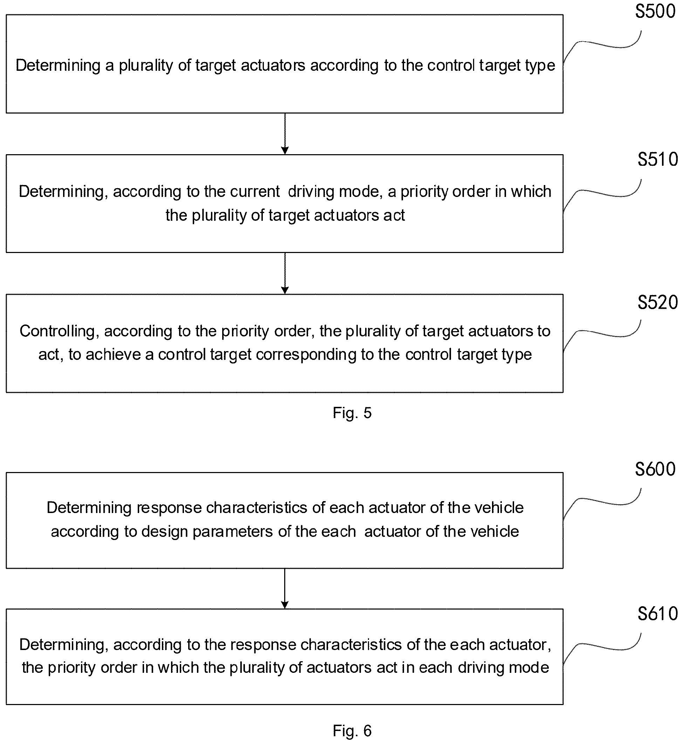

In an embodiment, as shown in Fig. 5, step S430 that according to the control target type of the vehicle body attitude, the plurality of actuators are controlled to act includes: steps S500-S520.

Step S500: the plurality of target actuators are determined according to the control target type.

Specifically, the target actuator refers to a particular execution system, such as steering, a drive, a brake, and suspension, on which intervention is required, according to the current control target type, to be performed, to adjust the vehicle attitude.

Illustratively, analysis of control target type: a control target type that is required to be currently achieved, such as yaw pre-stabilization and roll suppression, is recognized according to the driving scene and the adjustment requirement of the vehicle body attitude. Evaluation of capabilities of actuators: based on the driving mode and the current state of the vehicle, the capabilities and the response characteristics of the actuators are evaluated, and which actuator is most suitable for achieving the current control target type is determined. Selection of actuator: by using an expert system, or through machine learning or a fuzzy logic algorithm, one or more actuators are intelligently selected from the drive electric motor, the brake system, the steering system, and the suspension system as the target actuator(s). It is ensured that the control target can be efficiently achieved. According to the vehicle control target type, the required actuators include the front-wheel steering, the rear-wheel steering, the drive, the brake, and the suspension. In addition, a main actuator and an auxiliary actuator are further required to be selected according to the control target type. In cases of the yaw control target and the sideslip control target, the main actuators are the front-wheel steering, the rear-wheel steering, the brake, and the drive (four-wheel independent-drive configuration vehicle). The auxiliary actuators are the suspension and the drive (front-axle and rear-axle double-electric-motor configuration vehicle). In cases of the roll control target and the pitch control target, the main actuator is the suspension, and the auxiliary actuators are the drive and the brake. If a yaw control requirement and a roll control requirement both exist, responses are first made to the control targets of respective main actuators. For instance, the front-wheel steering, the rear-wheel steering, the brake, etc. first respond to the yaw requirement. The suspension first responds to the roll requirement.

Step S510: according to the current driving mode, a priority order in which the plurality of target actuators act is determined.

Specifically, the priority order is determined to resolve the problem of how to avoid a control conflict to ensure a maximum control effect in a multi-actuator intervention scene.

Illustratively, analysis of driving mode: according to the driving mode selected by the target object (the driver or the automatic driving system), a requirement for a vehicle performance in this mode is analyzed. For instance, more emphasis is put on energy consumption and comfort in the economic mode while more emphasis is put on a control response and stability in the sport mode. Design of control strategy: a control strategy based on a driving mode is designed. Intervention logics and control weights of all target actuators in different modes are defined, such that the priority order of the modes is indicated. Setting of priority of actuator: a priority order in which a plurality of target actuators act is automatically set according to the control strategy. It is ensured that an actuator having a higher priority can first make a response when the control instruction is executed. Conflicts among control instructions are avoided, and control efficiency is improved.

Step S520: according to the priority order, the plurality of target actuators are controlled to act, to achieve a control target corresponding to the control target type.

Specifically, the plurality of target actuators are controlled according to the determined priority order, such that the control target corresponding to the control target type is achieved.

Illustratively, generation of dynamics instructions: actuator dynamics instructions are generated according to the control target type and the capabilities of the target actuators. The actuator dynamics instructions include torque, a brake force, a steering angle, a suspension adjustment, and other parameters. Dispatch of actuator: the target actuators are dispatched, according to set priority order, to act according to the dynamics instruction. The actuator having a high priority is first controlled, such that timeliness and effectiveness of an action by the actuator are ensured. Coordination among control instructions: by applying a coordinated control algorithm, such as sliding mode control, optimal control, or fuzzy control, it is ensured that control instructions among the plurality of actuators do not interfere with one another. A consistent control effect is formed. Dynamic adjustment and optimization: during control, response effects of the actuators and a change in vehicle attitude are continuously monitored. The control instruction is adjusted in real time, such that the control target is optimized. It is ensured that an optimal vehicle body attitude of the vehicle can be kept in various driving modes.

In the embodiment, optimal attitude control over the vehicle in different driving modes and different driving scenes is achieved by intelligently selecting a plurality of target actuators and determining a priority order in which the target actuators act. After the control target type is determined, through the method, a most suitable actuator combination is accurately selected. Resource waste is avoided, and control efficiency is improved. By analyzing the driving mode and setting the priority order, it is ensured that actions by the actuators closely match the requirement of the target object. Performances of the vehicle in various driving modes are improved. For instance, energy saving in the economic mode, and handling performance in the sport mode are improved. Through dispatch of an actuator and coordination between control instructions, control conflicts among the actuators are effectively avoided. Consistency of control effects and a smooth adjustment of the vehicle attitude are ensured. Driving safety and driving comfort are improved. By the dynamic adjustment and optimization mechanism, control over the vehicle attitude can be adapted to continuously changing driving scenes. Continuous optimization is implemented, and overall driving experience is improved.

In an embodiment, as shown in Fig. 6, the method further includes steps S600 and S610.

Step S600: response characteristics of each actuator of the vehicle are determined according to design parameters of each actuator of the vehicle.

The response characteristics include an adjustment amplitude of the each actuator to the vehicle body attitude, a response speed of the each actuator, and an influence degree of an action by the each actuator on comfort of the vehicle.

Specifically, the response characteristics of the actuators determine effectiveness and applicability of the actuators in control over the vehicle attitude. These response characteristics include adjustment amplitudes, response speeds, and influences on comfort, and are critical for formulating a coordinated control strategy.

Illustratively, analysis of design parameters: design parameters of the actuators are collected and analyzed, such as a torque range of the drive electric motor, a pressure adjustment range of the brake system, an angular velocity range of the steering system, and a height adjustment range and a stiffness adjustment range of the suspension system. Modeling of response characteristics: response models of the actuators are established based on the design parameters. The response models include descriptions of the adjustment amplitudes to the vehicle body attitude, the response speeds of the actuators, and the influence degrees of the actions by the actuators on the comfort of the vehicle. Adjustment amplitude: influence degrees of the actuators on the vehicle body attitude at different working points are evaluated through experiments or simulations, such as an influence of a torque change of the drive electric motor on the yaw rate of the vehicle. Response speed: duration from time when the actuators receive control instructions to time when the actuators perform effective actions is measured. The duration characterizes dynamic performances of the actuators. Influences on comfort: influences of actions by the actuators on vehicle vibrations, noise, and driving and riding experience are evaluated, such that contributions or negative influences of the actions on comfort are quantified. Calibration of response characteristics: a calibration experiment is performed to verify accuracy and applicability of an actuator response model. It is ensured that the model can truly indicate actual performances of the actuators under different driving conditions.

Step S610: according to the response characteristics of the each actuator, the priority order in which the plurality of actuators act in each driving mode is determined.

Specifically, different driving modes have different requirements and expectations for the actuators. Thus, the present disclosure provides a method for determining, based on response characteristics, a priority order in which actuators act, to optimize a control effect and satisfy a particular requirement of a driving mode.

Illustratively, characteristic extraction of driving mode: a core characteristic of each driving mode is analyzed. For instance, in the economic mode, energy consumption is emphasized. In the sport mode, a control performance is emphasized. In the off-road mode, passability and stability are emphasized. Matching of response characteristics: matching degrees between the response characteristics of the actuators and a mode requirement are evaluated according to a characteristic of the driving mode. For instance, in the sport mode, response speeds and adjustment amplitudes of the steering system and the drive system are especially important. Setting of priority order: through a multi-target optimization algorithm and by comprehensively considering the response characteristics of the actuators and the requirement of the driving mode, a priority order in which the actuators act in this driving mode is determined. It is ensured that an actuator having a higher priority can respond to the control instruction earlier and more effectively.

In the embodiment, by deeply analyzing the design parameters of the actuators of the vehicle, the response characteristics of the actuators are evaluated and determined. The response characteristics include adjustment amplitudes, response speeds, and influence degrees on comfort. Through evaluations of this series of response characteristics, the vehicle control strategy can be dynamically adjusted according to actual capabilities of the actuators. Excessive usage or insufficient response of the actuators is avoided. Effective execution of the control instruction is ensured. Through the method, by analyzing the characteristic of the driving mode and matching the characteristic with the response characteristics of the actuators, an intervention order of the actuators can be intelligently adjusted. A performance of the vehicle in a particular driving mode, such as handling performance in the sport mode or passability in the off-road mode, is improved. Moreover, comprehensive comfort of the vehicle is optimized, and discomfort possibly caused by actions by the actuators is reduced. In addition, by setting the priority order, control conflicts among the actuators are effectively avoided, and stability and reliability of the control system in complex driving scenes are ensured. To sum up, through the refined evaluations of the response characteristics of the actuators and the setting of the priority order based on a driving mode, optimal attitude control over the vehicle in different driving modes and different driving scenes is implemented. A performance of the vehicle and a degree of satisfaction of the target object are significantly improved. The method has important technological progress significance and market application value.

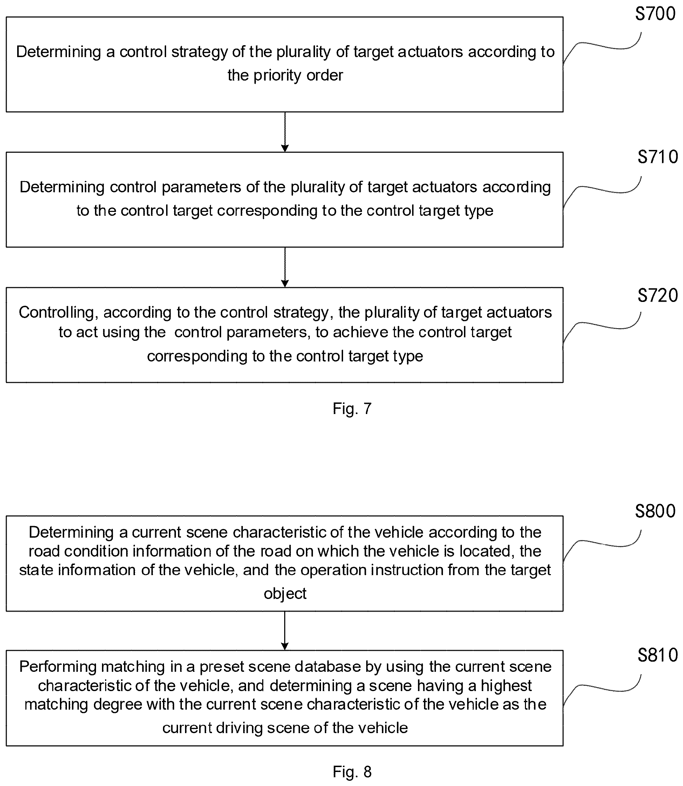

In an embodiment, as shown in Fig. 7, step S520 that according to the priority order, the plurality of target actuators are controlled to act, to achieve a control target corresponding to the control target type includes: steps S700-S720.

Step S700: a control strategy of the plurality of target actuators is determined according to the priority order.

The control strategy includes at least one of a lateral control strategy, a longitudinal control strategy, and a vertical control strategy of the vehicle.

Specifically, the control strategy defines how to control a lateral attitude, a longitudinal attitude, and a vertical attitude of the vehicle by the target actuators, and the response characteristics of the actuators and the particular requirement of the driving mode are considered.

Illustratively, classification of control strategies: control strategies are classified into a lateral control strategy, a longitudinal control strategy, and a vertical control strategy. Each strategy is used for adjusting an attitude of the vehicle in a particular direction. Lateral control strategy: a control strategy for adjusting the yaw rate, the sideslip angle, and other lateral attitude parameters of the vehicle is designed. For instance, through coordinated control by the steering system and the drive system, the vehicle stably runs on a curve. Longitudinal control strategy: a strategy for controlling acceleration, deceleration, and stability of the vehicle is formulated. For instance, through coordination between the drive electric motor and the brake system, smooth acceleration and deceleration of the vehicle under different road conditions are achieved. Vertical control strategy: a control strategy for adjusting the roll angle, the pitch angle, and the vertical displacement of the vehicle is designed. For instance, through an intelligent adjustment by the suspension system, comfort and stability of the vehicle running under complex road conditions are improved. Optimization of control strategy: according to the driving mode and the response characteristics of the actuators, the above control strategy is optimized. It is ensured that the driving comfort and safety are improved while the adjustment requirement of the vehicle attitude is satisfied.

Illustratively, limit obstacle avoidance control type: a rear-wheel steering angle requirement is computed according to a deviation between an actual yaw rate and an expected yaw rate. At an initial stage, the rear-wheel steering angle is controlled to be in the same direction as the front-wheel steering angle, such that vehicle oversteering is delayed. Moreover, in combination with torque control, a vehicle speed is reduced. The vehicle body attitude is improved by using brake torque. A roll state of a vehicle body is improved through the suspension.

Split adhesion road control type: according to an adhesion coefficient of a left side, an adhesion coefficient of a right side, and the deviation between the actual yaw rate and the expected yaw rate, a rear-wheel steering angle required by the vehicle for keeping running straight is computed. Moreover, in combination with a more aggressive traction control parameter, an acceleration performance in a case of a Split adhesion road is improved. In combination with a more aggressive anti-lock brake system control parameter, a brake distance in a case of the Split adhesion road is shortened.

Step adhesion road control type: a state of a rear axle is previewed according to a state of a front wheel. In combination with a lateral stability requirement, torque of a rear wheel is controlled in advance to be increased or decreased.

Lateral movement function: after front wheels and rear wheels are controlled to be in a toe-out state, in a case of a four-wheel independent-drive vehicle, through slip rate control over the front wheels and the rear wheels, rotation speeds of the front wheels and rotation speeds of the rear wheels are controlled to equal to each other in opposite directions. Thus, a component, in a lateral direction of the vehicle, of a longitudinal force of a wheel is greater than a component, in a lateral direction of the vehicle, of a lateral force of a wheel. A lateral movement of the vehicle is achieved. In a case of a front-axle and rear-axle double-electric-motor configuration vehicle, besides front-axle and rear-axle drive slip rate control, timely intervention of four-wheel brake is further required to ensure consistency of four-wheel slip rates.

One-click exit function: after the rear wheels are locked through braking, the front-wheel steering is controlled to achieve a maximum value. Moreover, in-situ one-click exit of the vehicle is achieved through the front-wheel slip rate control.

If no stability control requirement exists, comfort and convenience are used as control requirements. The control requirements include, but are not limited to, the following control.

Linear yaw rate gain: wire-controlled front-wheel steering and wire-controlled rear-wheel steering are cooperatively controlled, to achieve a linear yaw rate gain.

Flexible small-radius turning: rear-wheel steering and brake are cooperatively controlled, to achieve convenience of low-speed turning of the vehicle.

Acceleration vector control: the steering, the drive, the brake, and the suspension are cooperatively controlled. A sudden change in acceleration of the vehicle is avoided. A continuous vector change in acceleration is achieved. Driving and riding comfort of a user is improved.

Step S710: control parameters of the plurality of target actuators are determined according to the control target corresponding to the control target type.

Specifically, the control parameters are specific values for achieving the control strategy of the target actuators, such as torque, a brake force, and a steering angle. The control parameters directly determine action amplitudes and effects of the actuators.

Illustratively, conversion of control target: the control target (such as an expected yaw rate and an expected roll angle) corresponding to the control target type is converted into a control parameter requirement of a specific actuator. Setting of parameters: based on the response characteristics of the actuators and the control target, control parameters of the actuators are set, such as a steering angle, drive torque, a brake force, and suspension stiffness. Optimization of parameters: through an optimization algorithm, such as particle swarm optimization, a genetic algorithm, or a gradient descent method, according to the state of the vehicle and the road condition, the control parameters are dynamically adjusted, to achieve an optimal control effect.

Illustratively, the control parameters are determined. For instance, in a case of roll, a roll control requirement can be obtained according to an actual roll angle.

Yaw: a total expected yaw moment requirement is obtained through sliding mode control according to the deviation between the actual yaw rate and the expected yaw rate, and a deviation between an actual centroid sideslip angle (or called as side-slip angle of center of mass) and an expected centroid sideslip angle. According to the centroid sideslip angle, the yaw rate, the response characteristics of the actuators, in consideration of a minimum used tire force constraint, and through optimal control, expected yaw moments of the actuators are obtained. In addition, by adjusting a characteristic of the suspension and adjusting torque distribution between a front axle and a rear axle in a case of the front-axle and rear-axle double-electric-motor configuration vehicle, a vertical load of each wheel is affected, and yaw pre-stability control is indirectly affected.

Pitch: a pitch control requirement can be obtained according to an actual pitch angle.

Step S720: the plurality of target actuators are controlled, according to the control strategy, to act using the control parameters, to achieve the control target corresponding to the control target type.

Specifically, after the control strategy and the parameters of the actuators are determined, according to the present disclosure, the actuators are accurately controlled to adjust the vehicle attitude according to the set parameters, to achieve the control target.

Illustratively, generation of actuator instructions: determined control parameters are converted into specific control instructions for the actuators. Performing of dynamic control: the control parameters of the actuators are dynamically adjusted according to the control strategy. It is ensured that the vehicle can rapidly respond to control instructions in different driving modes and different driving scenes to be adjusted to the target attitude. Response monitoring of actuators: response effects of the actuators are monitored in real time. The response effects include an actual change in vehicle attitude, and health of the actuators. Accuracy of a control effect and reliability of the actuators are ensured. Parameter feedback adjustment: a closed-loop control system is established. Data of response monitoring of the actuators is fed back to a control strategy optimization module. The control parameters are adjusted according to an actual effect. The vehicle body attitude is more accurately controlled.

In the embodiment, by determining the control strategy and the control parameters of the target actuators, the vehicle body attitude of the vehicle is efficiently and accurately controlled. Firstly, by classifying control strategies into a lateral control strategy, a longitudinal control strategy, and a vertical control strategy, the present disclosure can comprehensively cover all aspects of an adjustment of the vehicle attitude. Stability and handling performance of the vehicle in complex driving scenes are ensured. Secondly, through precise setting and dynamic optimization of the control parameters, it is ensured that the actuators can adjust the vehicle attitude through a most suitable method. Control accuracy and a response speed are improved. Moreover, energy consumption is reduced, and comfort is improved. Finally, by introducing the closed-loop control mechanism, the system can continuously monitor responses of the actuators and changes in vehicle body attitude. The control parameters are adjusted in real time according to feedback. The control effect is continuously optimized. Excellent performances of the vehicle in various driving modes are ensured.

In an embodiment, as shown in Fig. 8, step S200 that a current driving scene of a vehicle is determined according to road condition information of a road on which the vehicle is located, state information of the vehicle, and an operation instruction from a target object includes: steps S800 and S810.

Step S800: a current scene characteristic of the vehicle is determined according to the road condition information of the road on which the vehicle is located, the state information of the vehicle, and the operation instruction from the target object.

Specifically, the current scene characteristic of the vehicle refers to a most accurate scene description determined by comprehensively evaluating, based on road condition information of a road on which the vehicle is located, vehicle state information, and an operation instruction from a target object (a driver or an automatic driving system), a current driving environment and a current vehicle state.

Illustratively, acquisition of road condition information: road information is acquired by an in-vehicle sensor (such as a camera, radar, lidar, satellite positioning, and an inertial sensor). The road information includes a road type (such as an urban street, a highway, a rural road, and an off-road type), a road condition (such as a wet and slippery road, a road having a pothole, a flat road, and a road having a gradient), a traffic condition (such as congestion, smoothness, traffic density), etc. Monitoring of state information of vehicle: various state information of the vehicle is monitored in real time, such as a speed, acceleration, a steering angle, a brake pressure, a suspension height, and vertical load distribution of a vehicle, and an operation instruction (such as an operation on an accelerator pedal, an operation on a brake pedal, and an operation on a location of a steering wheel) from a driver, etc., to indicate a real-time running state of the vehicle. Extraction of scene characteristics: based on the above information and through data fusion and a machine learning algorithm (such as a support vector machine, a random forest, and a neural network), a key characteristic indicating a current scene is extracted, such as a road curvature, a wet and slippery degree, and a yaw rate and a roll angle of a vehicle.

Step S810: matching is performed in a preset scene database by using the current scene characteristic of the vehicle, and a scene having a highest matching degree with the current scene characteristic of the vehicle is determined as the current driving scene of the vehicle.

Specifically, the driving scene refers to a most matching scene description found from a preset scene database according to a current scene characteristic of the vehicle. Thus, more specific scene information and a control strategy basis are provided for controlling the vehicle attitude.

Illustratively, establishment of scene database: characteristics of various typical driving scenes are collected and analyzed, and a scene database is established. The scene database includes combinations of different road conditions, different vehicle states, and different driving operation instructions, as well as control requirements and targets in all scenes. Scene matching algorithm: a matching algorithm is designed, such as a nearest neighbor algorithm based on a Euclidean distance, and a scene recognition algorithm based on similarity. The current scene characteristic of the vehicle is compared with a characteristic in the scene database, and a scene having a highest matching degree is found as the current driving scene. Scene decision: according to a matching result, a decision system automatically recognizes the current driving scene, and transmits scene information to the control strategy optimization module, to adjust the control strategy and the parameters of the actuators to achieve optimal control over the vehicle attitude.

In the embodiment, the current scene characteristic of the vehicle is accurately determined by acquiring the road condition information of the road on which the vehicle is located, the vehicle state information, and the operation instruction from the target object. Thus, key information is provided for intelligent control over the vehicle in a complex environment. The scene features are extracted through advanced data fusion and machine learning technologies. Thus, comprehensiveness and accuracy of information are ensured. Matching is performed in the preset scene database by using the scene feature, to determine the scene having the highest matching degree with the current scene feature of the vehicle as the current driving scene. Through this process, pertinence and effectiveness of control over the vehicle attitude are greatly improved. Through the establishment of the scene database and the design of the scene matching algorithm, the system can flexibly cope with various driving conditions, such as urban congestion, high-speed turning, a wet and slippery road, and an off-road bump. An optimal control strategy and an optimal parameter setting are provided for the vehicle, and stability and safety of the vehicle in different scenes are ensured.

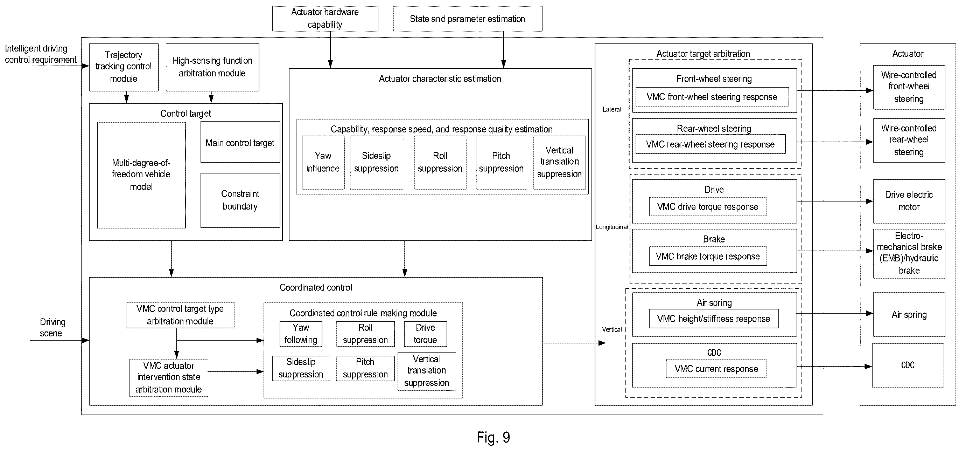

In an embodiment, as shown in Fig. 9, a schematic diagram of a coordinated control architecture of a vehicle motion controller (VMC) is provided. The coordinated control architecture is used for implementing the method for controlling a vehicle body attitude in any of the above embodiments, and can control a motion state of a vehicle to achieve coordinated control in a lateral direction, a longitudinal direction, and a vertical direction. The architecture of the VMC includes a plurality of structural layers: an information acquisition layer, a target determination layer, a coordinated control layer, and an execution layer.

The information acquisition layer includes:
a vehicle state and road parameter estimation module. Estimation of state of vehicle: this part is responsible for monitoring and estimating key state parameters of the vehicle in real time, and collecting and estimating real-time vehicle states and road environmental parameters. The parameters include but are not limited to a vehicle speed, a sideslip angle, a roll angle, a pitch angle, a vertical load, etc. These estimated values are bases for subsequent control decisions. Estimation of reference vehicle speed: an instantaneous speed of the vehicle is acquired. Estimation of centroid sideslip angle: a location deviation of a vehicle centroid (or called as vehicle center of mass) relative to a driving direction is estimated. Estimation of roll angle: a lateral inclination angle of the vehicle is measured. Estimation of pitch angle: a front-rear inclination angle of the vehicle is measured. Estimations of vertical loads of four wheels: a vertical load borne by each wheel of the vehicle is estimated. Estimation of weight of vehicle: a total weight of the vehicle is computed in real time.

Estimation of road parameter module: this module collects and analyzes road conditions, such as a gradient and a road adhesion coefficient, to provide real-time environmental information for a control system. Specifically, estimation of gradient: a gradient of a current road is determined. Estimation of road adhesion coefficient: a frictional performance of a road surface is evaluated.

The information acquisition layer further includes an actuator response characteristic estimation module. Evaluations of capabilities: maximum control capabilities of the actuators (such as the drive electric motor, the brake system, the steering system, and the suspension system) under a current condition are evaluated. Response speed: duration from time when the actuators receive control signals to time when the actuators make responses is measured. The duration indicates dynamic performances of the actuators. Response quality: influences of actions by the actuators on stability, comfort, etc. of the vehicle are evaluated. Specifically, the quality may include quality of a yaw influence, sideslip suppression, roll suppression, pitch suppression, and vertical translation suppression, etc.

The target determination layer includes a control target computation module. The control target computation module can compute, by acquiring a control requirement and considering a constraint boundary condition, an expected control target of the vehicle according to a multi-degree-of-freedom vehicle model and a driving mode. Computation of expected yaw rate: a yaw control target is set based on a vehicle dynamic model and a driving requirement. Constraint boundaries of the centroid sideslip angle, the roll angle, the pitch angle, and the vertical translation are established. Stability and safety of the vehicle are ensured.

The target determination layer further includes a multi-degree-of-freedom vehicle model. The multi-degree-of-freedom vehicle model computes, by combining dynamic characteristics of the vehicle, such as yaw, roll, and pitch, the expected control target in a current driving mode and scene.

The coordinated control layer includes:
a VMC control target type arbitration module. The VMC control target type arbitration module determines a current main control target type of the vehicle according to the driving mode and the driving scene. Specifically, the current main control target type includes non-intervention: no active control is performed in a user-defined mode or in a driving scene without a control requirement. Limit obstacle avoidance, Split adhesion road, Step adhesion road, and other high-sensing functions: a most appropriate control target type is obtained through arbitration according to a scene requirement. Control over pre-stabilization: intervention is performed in advance before the vehicle enters an unstable state. Control over comfort: running comfort of the vehicle is improved in a case of no stability threat. Control target type: the most suitable control target type is obtained through arbitration according to the driving mode and the driving scene, such as yaw, sideslip, roll, pitch, and vertical translation.

The coordinated control layer further includes a VMC actuator intervention state arbitration module. Selection of actuator: according to the control target type and the response characteristics of the actuators, a most appropriate actuator combination is intelligently selected.

The coordinated control layer further includes a coordinated control rule formulation module. This coordinated control rule making module makes an optimal coordinated control rule to ensure cooperated work among the actuators.

Making of rules: based on the control target type and the selected actuator, the optimal coordinated control rule is made, to ensure that the work among the actuators does not conflict and that the vehicle body attitude is adjusted to an optimal state. Making of rules: control rules for yaw following, roll suppression, drive torque, roll suppression, pitch suppression, and vertical translation suppression are made. Dynamic adjustments of rules: in consideration of characteristics of the actuators and scene requirements, control rules are dynamically adjusted to optimize control effects.

The execution layer includes:
an actuator target arbitration module. The actuator target arbitration module selects a most appropriate actuator to respond to the control target type obtained through arbitration. Selection of optimal actuator: a main control actuator is selected based on actuator diagnosis, vehicle states, and scene requirements. When an actuator is faulty, another actuator is dispatched to replace the actuator to perform a function.

The execution layer further includes an actuator dynamics instruction conversion module. The actuator dynamics instruction conversion module converts the control rules after coordination into specific dynamics instructions for the actuators. Generation of instructions: control targets after the coordination are converted into specific dynamics instructions for the actuators, such as torque, a brake force, and a steering angle. Sending of instructions: the dynamics instructions are sent to corresponding actuators, such that the actuators perform control actions to adjust the vehicle attitude. The control rules are converted into control instructions of the front-wheel steering, the rear-wheel steering, the drive, the brake, the suspension, and other actuators. Control instructions are sent to the actuators, such that the actuators perform specific control actions. For instance, in a lateral direction, front-wheel steering and rear-wheel steering can be controlled. In a longitudinal direction, torque of the drive electric motor a brake system (an electromechanical brake (EMB)/a hydraulic brake), etc. can be controlled. In a vertical direction, a height and stiffness of an air spring, and a current of continuous damping control (CDC) can be controlled, damping of the vehicle can be changed, etc.

The specific control method is described in the above embodiments and not repeated.

In the embodiment, a VMC control architecture effectively integrates vehicle state information, road parameters, actuator characteristics, driving modes, and scene requirements, such that coordinated control over the vehicle in three dimensions, that is, in a lateral direction, a longitudinal direction, and a vertical direction is implemented. A multi-level control strategy includes target arbitration, actuator arbitration, and coordinated control rule making. According to the present disclosure, it is ensured that an optimal vehicle body attitude of the vehicle can be kept in different driving modes and under complex road conditions, such that driving safety and driving comfort are improved.

Through the descriptions in the above embodiments, a person skilled in the art can clearly know that the method according to the above embodiments may be implemented by software plus a necessary general-purpose hardware platform, and certainly may be implemented by hardware, but in many situations, the former is a preferred embodiment. Based on such understanding, the technical solution in the present disclosure may be embodied in a form of a software product in essence or a part contributing to the prior art. The computer software product is stored in a storage medium (such as a read-only memory (ROM)/a random access memory (RAM), a magnetic disk, and an optical disk), and includes several instructions for enabling a terminal device (which may be a mobile phone, a computer, a server, or a network device, etc.) to perform the method in all embodiments of the present disclosure.

The embodiment further provides an apparatus for controlling a vehicle body attitude. The apparatus for controlling a vehicle body attitude is configured to achieve the above embodiments and preferred embodiments. The described content is not repeated. The term "module", as used below, may implement a combination of software and/or hardware which has a pre-determined function. Although the apparatus described in the following embodiments is preferably implemented by software, an implementation by hardware or a combination of the software and the hardware is also possible and conceivable.

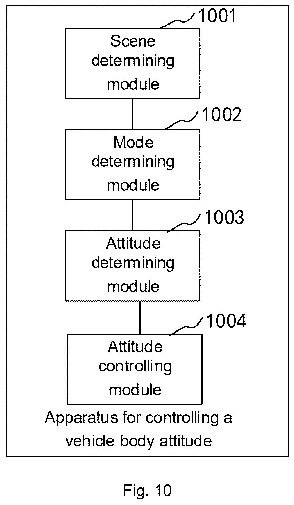

Fig. 10 is a structural block diagram of an optional apparatus for controlling a vehicle body attitude according to an embodiment of the present disclosure. As shown in Fig. 10, the apparatus for controlling a vehicle body attitude includes:
a scene determining module 1001 configured to determine a current driving scene of a vehicle according to road condition information of a road on which the vehicle is located, state information of the vehicle, and an operation instruction from a target object;
a mode determining module 1002 configured to determine a current driving mode of the vehicle in response to a selection instruction from the target object;
an attitude determining module 1003 configured to determine a target vehicle body attitude of the vehicle according to the current driving scene and the current driving mode; and
an attitude controlling module 1004 configured to control, in a case that a current vehicle body attitude of the vehicle does not match the target vehicle body attitude, a plurality of actuators of the vehicle to act, to match an adjusted current vehicle body attitude of the vehicle with the target vehicle body attitude.

By the above apparatus for controlling a vehicle body attitude, firstly, a current driving scene of a vehicle is determined according to road condition information of a road on which the vehicle is located, state information of the vehicle, and an operation instruction from a target object. Thus, the vehicle body attitude of the vehicle can be accurately controlled subsequently. In response to a selection instruction from the target object, a current driving mode of the vehicle is determined, such that a driving requirement of the target object is obtained. Thus, subsequent control over the vehicle body attitude of the vehicle can satisfy the requirement of the target object. According to the driving scene and the driving mode, a target vehicle body attitude of the vehicle is determined, such that an optimal vehicle body attitude is obtained. The optimal vehicle body attitude can guarantee handling performance, stability, and comfort of the vehicle. In a case that a current vehicle body attitude of the vehicle does not match the target vehicle body attitude, a plurality of actuators of the vehicle are controlled to act, to match the adjusted current vehicle body attitude of the vehicle with the target vehicle body attitude. Thus, the vehicle body attitude is controlled. To sum up, according to the method in the present disclosure, by accurately recognizing the driving scene and intelligently matching the driving mode, the target vehicle body attitude of the vehicle can be dynamically adjusted. It is ensured that optimal handling performance and optimal stability of the vehicle can be kept under various driving conditions.

In an illustrative embodiment, the above attitude determining module 1003 is further configured to determine a constraint boundary condition of the vehicle according to physical parameter information of the vehicle; determine, according to the operation instruction from the target object, a vehicle motion state expected by the target object; determine a target vehicle motion state according to the current driving scene and the vehicle motion state expected by the target object, where the target vehicle motion state satisfies the constraint boundary condition; and determine the target vehicle body attitude of the vehicle according to the target vehicle motion state and the current driving mode.

In an illustrative embodiment, the above attitude controlling module 1004 is further configured to acquire a current vehicle body attitude of the vehicle; determine an adjustment requirement of the vehicle body attitude in a case that the current vehicle body attitude of the vehicle does not match the target vehicle body attitude; determine a control target type of the vehicle body attitude according to the current driving scene and the adjustment requirement of the vehicle body attitude; and control, according to the control target type of the vehicle body attitude, the plurality of actuators to act.

In an illustrative embodiment, the above attitude controlling module 1004 is further configured to determine the plurality of target actuators according to a control target type; determine, according to the current driving mode, a priority order in which the plurality of target actuators act; and control, according to the priority order, the plurality of target actuators to act, to achieve a control target corresponding to the control target type.

In an illustrative embodiment, the above apparatus for controlling a vehicle body attitude further includes:
a response determining module configured to determine response characteristics of each actuator of the vehicle according to design parameters of the each actuator of the vehicle, where the response characteristics include an adjustment amplitudes of the each actuator to the vehicle body attitude, a response speed of the each actuator, and an influence degree of an actions by the each actuator on comfort of the vehicle; and
a priority determining module configured to determine, according to the response characteristics of the each actuator, the priority order in which the plurality of actuators act in each driving mode.

In an illustrative embodiment, the above attitude controlling module 1004 is further configured to determine a control strategy of the plurality of target actuators according to the priority order, where the control strategy includes at least one of a lateral control strategy, a longitudinal control strategy, and a vertical control strategy of the vehicle; determine control parameters of the plurality of target actuators according to the control target corresponding to the control target type; and control, according to the control strategy, the plurality of target actuators to act using the control parameters, to achieve the control target corresponding to the control target type.

In an illustrative embodiment, the above scene determining module 1001 is further configured to determine a current scene characteristic of the vehicle according to the road condition information of the road on which the vehicle is located, the state information of the vehicle, and the operation instruction from the target object; and perform matching in a preset scene database by using the current scene characteristic of the vehicle, and determine a scene having a highest matching degree with the current scene characteristic of the vehicle as the current driving scene of the vehicle.

An embodiment of the present disclosure further provide a storage medium. The storage medium includes a stored computer program. The above program, when running, performs any one of the above methods.

Optionally, in the embodiment, the above storage medium may be configured to store a program code for performing steps as follows:
step S1: a current driving scene of a vehicle is determined according to road condition information of a road on which the vehicle is located, state information of the vehicle, and an operation instruction from a target object;
step S2: a current driving mode of the vehicle is determined in response to a selection instruction from the target object;
step S3: a target vehicle body attitude of the vehicle is determined according to the current driving scene and the current driving mode; and
step S4: in a case that a current vehicle body attitude of the vehicle does not match the target vehicle body attitude, a plurality of actuators of the vehicle are controlled to act, to match an adjusted current vehicle body attitude of the vehicle with the target vehicle body attitude.

An embodiment of the present disclosure further provides an electronic apparatus. The electronic apparatus includes a memory and a processor. The memory stores a computer program. The processor is configured to run the computer program to perform the steps in any one of the above method embodiments.

Optionally, the above electronic apparatus may further includes a transmission device and an input/output device. The transmission device is connected to the above processor. The input/output device is connected to the above processor.

Optionally, in the embodiment, the above processor may be configured to perform, by the computer program, steps as follows:
step S1: a current driving scene of a vehicle is determined according to road condition information of a road on which the vehicle is located, state information of the vehicle, and an operation instruction from a target object;
step S2: a current driving mode of the vehicle is determined in response to a selection instruction from the target object;
step S3: a target vehicle body attitude of the vehicle is determined according to the current driving scene and the current driving mode; and
step S4: in a case that a current vehicle body attitude of the vehicle does not match the target vehicle body attitude, a plurality of actuators of the vehicle are controlled to act, to match an adjusted current vehicle body attitude of the vehicle with the target vehicle body attitude.

Optionally, in the embodiment, the above storage medium may include but is not limited to a universal serial bus flash disk, a read-only memory (ROM), a random access memory (RAM), a removable hard disk, a magnetic disk, or an optical disk, and various media that can store program codes.

An embodiment of the present disclosure further provides a computer program product. The computer program product includes a non-volatile computer-readable storage medium. The non-volatile computer-readable storage medium stores a computer program product. The computer program, when executed by a processor, implements steps of the method in all embodiments of the present disclosure.

Optionally, in the embodiment, the above computer program may be configured to implement, when the computer program is executed by the processor, steps as follows:
step S1: a current driving scene of a vehicle is determined according to road condition information of a road on which the vehicle is located, state information of the vehicle, and an operation instruction from a target object;
step S2: a current driving mode of the vehicle is determined in response to a selection instruction from the target object;
step S3: a target vehicle body attitude of the vehicle is determined according to the current driving scene and the current driving mode; and
step S4: in a case that a current vehicle body attitude of the vehicle does not match the target vehicle body attitude, a plurality of actuators of the vehicle are controlled to act, to match an adjusted current vehicle body attitude of the vehicle with the target vehicle body attitude.

Optionally, particular instances in the embodiment can be obtained with reference to the instances described in the above embodiments and optional embodiments, and are not repeated herein.

Apparently, a person skilled in the art should understand that all modules or steps in the present disclosure can be implemented by a general-purpose computation apparatus. The modules or steps can be centralized on a single computation apparatus or distributed on a network composed of a plurality of computation apparatuses. Optionally, the modules or steps may be implemented by using program codes that can be executed by the computation apparatus, and thus may be stored in a storage apparatus to be executed by the computation apparatus. In some situations, the steps shown or described may be executed in an order different from those herein, or are fabricated as integrated circuit modules respectively. Or a plurality of modules or steps are fabricated as a single integrated circuit module to be implemented. Thus, the present disclosure is not limited to any particular combination of hardware and software.

The above embodiments are merely preferred embodiments of the present disclosure, and are not used for limiting the present disclosure. A person skilled in the art can make various modifications and changes on the present disclosure. Any modifications, equivalent substitutions, improvements, etc. made within the principles of the present disclosure should fall within the scope of protection of the present disclosure.

## Claims

1. A method for controlling a vehicle body attitude, **characterized by** comprising:
determining a current driving scene of a vehicle according to road condition information of a road on which the vehicle is located, state information of the vehicle, and an operation instruction from a target object (S200);
determining a current driving mode of the vehicle in response to a selection instruction from the target object (S210);
determining a target vehicle body attitude of the vehicle according to the current driving scene and the current driving mode (S220);
controlling, in a case that a current vehicle body attitude of the vehicle does not match the target vehicle body attitude, a plurality of actuators of the vehicle to act, to match an adjusted current vehicle body attitude of the vehicle with the target vehicle body attitude (S230).

2. The method for controlling a vehicle body attitude according to claim 1, wherein the determining a target vehicle body attitude of the vehicle according to the current driving scene and the current driving mode comprises:
determining a constraint boundary condition of the vehicle according to physical parameter information of the vehicle (S300) ;
determining, according to the operation instruction from the target object, a vehicle motion state expected by the target object (S310) ;
determining a target vehicle motion state according to the current driving scene and the vehicle motion state expected by the target object, wherein the target vehicle motion state satisfies the constraint boundary condition (S320) ;
determining the target vehicle body attitude of the vehicle according to the target vehicle motion state and the current driving mode (S330) .

3. The method for controlling a vehicle body attitude according to claim 2, wherein the determining, according to the operation instruction from the target object, a vehicle motion state expected by the target object comprises:
determining a driving intention of the target object according to the operation instruction from the target object;
predicting the vehicle motion state expected by the target object according to the operation instructions from the target object, the driving intention of the target object, and physical characteristics of the vehicle.

4. The method for controlling a vehicle body attitude according to claim 1, wherein the controlling, in a case that a current vehicle body attitude of the vehicle does not match the target vehicle body attitude, a plurality of actuators of the vehicle to act comprises:
acquiring the current vehicle body attitude of the vehicle (S400) ;
determining an adjustment requirement of a vehicle body attitude in a case that the current vehicle body attitude of the vehicle does not match the target vehicle body attitude (S410) ;
determining a control target type of the vehicle body attitude according to the current driving scene and the adjustment requirement of the vehicle body attitude (S420) ;
controlling, according to the control target type of the vehicle body attitude, the plurality of actuators to act (S430) .

5. The method for controlling a vehicle body attitude according to claim 4, wherein the determining an adjustment requirement of a vehicle body attitude in a case that the current vehicle body attitude of the vehicle does not match the target vehicle body attitude comprises:
comparing the current vehicle body attitude with the target vehicle body attitude to determine a deviation between the current vehicle body attitude with the target vehicle body attitude;
determining the adjustment requirement according to the deviation and an emergency degree, wherein the adjustment requirement are divided into different grades, and the different grades includes a slight adjustment, a medium adjustment, and an emergency adjustment.

6. The method for controlling a vehicle body attitude according to claim 4, wherein the controlling, according to the control target type of the vehicle body attitude, the plurality of actuators to act comprises:
determining a plurality of target actuators according to the control target type (S500) ;
determining, according to the current driving mode, a priority order in which the plurality of target actuators act (S510) ; and
controlling, according to the priority order, the plurality of target actuators to act, to achieve a control target corresponding to the control target type (S520) .

7. The method for controlling a vehicle body attitude according to claim 6, comprising:
determining response characteristics of each actuator of the vehicle according to design parameters of the each actuator of the vehicle (S600) , wherein the response characteristics comprise an adjustment amplitude of the each actuator to the vehicle body attitude, a response speed of the each actuator, and an influence degree of an action by the each actuator on comfort of the vehicle;
determining, according to the response characteristics of the each actuator, the priority order in which the plurality of actuators act in each driving mode (S610) .

8. The method for controlling a vehicle body attitude according to claim 6, wherein the controlling, according to the priority order, the plurality of target actuators to act, to achieve a control target corresponding to the control target type comprises:
determining a control strategy of the plurality of target actuators according to the priority order (S700) , wherein the control strategy comprises at least one of a lateral control strategy, a longitudinal control strategy, and a vertical control strategy of the vehicle;
determining control parameters of the plurality of target actuators according to the control target corresponding to the control target type (S710) ;
controlling, according to the control strategy, the plurality of target actuators to act using the control parameters, to achieve the control target corresponding to the control target type (S720) .

9. The method for controlling a vehicle body attitude according to claim 6, wherein the determining, according to the current driving mode, a priority order in which the plurality of target actuators act comprises:
automatically setting the priority order in which the plurality of target actuators act according to a control strategy for the current driving mode, wherein the control strategy defines intervention logics and control weights of the plurality of target actuators in the current driving mode.

10. The method for controlling a vehicle body attitude according to claim 4, wherein the controlling, according to the control target type of the vehicle body attitude, the plurality of actuators to act comprises:
converting the control target type of the vehicle body attitude into actuator dynamics instructions;
dispatching and controlling, according to the actuator dynamics instructions, the plurality of actuators to act.

11. The method for controlling a vehicle body attitude according to any one of claims 1-10, wherein the determining a current driving scene of a vehicle according to road condition information of a road on which the vehicle is located, state information of the vehicle, and an operation instruction from a target object comprises:
determining a current scene characteristic of the vehicle according to the road condition information of the road on which the vehicle is located, the state information of the vehicle, and the operation instruction from the target object (S800) ;
performing matching in a preset scene database by using the current scene characteristic of the vehicle, and determining a scene having a highest matching degree with the current scene characteristic of the vehicle as the current driving scene of the vehicle (S810) .

12. An apparatus for controlling a vehicle body attitude, comprising:
a scene determining module (1001) configured to determine a current driving scene of a vehicle according to road condition information of a road on which the vehicle is located, state information of the vehicle, and an operation instruction from a target object;
a mode determining module (1002) configured to determine a current driving mode of the vehicle in response to a selection instruction from the target object;
an attitude determining module (1003) configured to determine a target vehicle body attitude of the vehicle according to the current driving scene and the current driving mode; and
an attitude controlling module (1004) configured to control, in a case that a current vehicle body attitude of the vehicle does not match the target vehicle body attitude, a plurality of actuators of the vehicle to act, to match an adjusted current vehicle body attitude of the vehicle with the target vehicle body attitude.

13. A computer-readable storage medium, storing a computer program, wherein the computer program, when executed by a processor, implements steps of the method according to any one of claims 1-11.

14. An electronic apparatus, comprising a memory, a processor, and a computer program stored in the memory and capable of being run by the processor, wherein the processor, when executing the computer program, implements steps of the method according to any one of claims 1-11.

15. A computer program product, comprising a computer program, wherein the computer program, when executed by a processor, implements steps of the method according to any one of claims 1-11.
